**Europäisches Patentamt**

**European Patent Office**

**Office européen des brevets**

(19)

(11) Veröffentlichungsnummer : **0 221 915**
**B1**

(12) **EUROPÄISCHE PATENTSCHRIFT**

(45) Veröffentlichungstag der Patentschrift :
13.12.89

(51) Int. Cl.⁴ : **C 23 C 30/00**

(21) Anmeldenummer : 86902302.8

(22) Anmeldetag : 28.04.86

(86) Internationale Anmeldenummer :
PCT/CH 86/00058

(87) Internationale Veröffentlichungsnummer :
WO/8606757 (20.11.86 Gazette 86/25)

(54) DURCH EIN THERMISCHES AUFTRAGSVERFAHREN HERGESTELLTE SCHUTZSCHICHT UND PULVERFÖRMIGER WERKSTOFF ZUM HERSTELLEN DERSELBEN.

(30) Priorität : 15.05.85 CH 2078/85

(43) Veröffentlichungstag der Anmeldung :
20.05.87 Patentblatt 87/21

(45) Bekanntmachung des Hinweises auf die Patenterteilung : 13.12.89 Patentblatt 89/50

(84) Benannte Vertragsstaaten :
BE DE FR GB IT NL SE

(56) Entgegenhaltungen :
WO-A-85/001 27
DE-A- 3 018 007
US-A- 2 868 639
US-A- 3 155 491
Conference Wear Fract.Prev.Proc.Confer. 81, veröffentlicht 1980, ASM, Metals Park, Ohio (US) Manshar
Asnani: "Wear testing of cobalt-free hardfacing
alloys for engine valves", Seiten 101-119, siehe Seite
113, Tabelle 2
Wear Mater, Band 3, 1981 H.R. Shetty: "A study of
abrasive wear mechanisms in cobalt-base alloys",
Seiten 406-414

(73) Patentinhaber : Castolin S.A.

CH-1025 Saint-Sulpice (CH)

(72) Erfinder : SIMM, Wolfgang
Chemin de Ruchoz
CH-1024 Ecublens (CH)
Erfinder : STEINE, Hans-Theo
Chemin de la Plaine 5
CH-1022 Chavannes (CH)

(74) Vertreter : Hranitzky, Wilhelm Max et al
c/o WILLIAM BLANC & CIE 9, rue du Valais
CH-1202 Genève (CH)

## Beschreibung

Die vorliegende Erfindung betrifft eine durch ein thermisches Auftragsverfahren hergestellte Schutzschicht auf einen Grundkörper sowie einen pulverförmigen Werkstoff zum Herstellen dieser Schicht. Aufgabe der Erfindung ist es, eine besonders verschleissfeste und korrosionsbeständige Schicht zu schaffen, die insbesondere auch unter der Einwirkung von heissen Gasen und Temperaturen von 600-800 °C beständig bleibt.

Dies wird erfindungsgemäss durch eine Schicht aus einer Legierung der im kennzeichnenden Teil des Patentanspruchs 1 angegebenen Zusammensetzung erreicht. Eine Schicht aus einer solchen Legierung erweist sich als temperaturbeständig bis etwa 600 °C und zeichnet sich im übrigen durch eine sehr gute Verschleissfestigkeit und Korrosionsbeständigkeit aus.

Die Patentansprüche 2 und 3 geben bevorzugte Zusammensetzungen der erfindungsgemässen Schutzschicht an, wobei bei den genannten Zusammensetzungen insbesondere die Temperaturbeständigkeit 700 bzw. 800 °C erreicht.

Eine solche Schutzschicht kann insbesondere durch das thermische Auftragen einer pulverförmigen Legierung der gleichen Zusammensetzung wie die gewünschte Schicht hergestellt werden. Als thermisches Auftragen werden Verfahren wie das thermische Spritzen von pulverförmigen Werkstoffen, z. B. mit Hilfe eines Autogen-Flammspritzbrenners oder eines Plasmabrenners, und Plasma-Pulverauftragsschweissverfahren verstanden.

Die pulverförmige Legierung kann beispielsweise durch Verdüsen aus der Schmelze, insbesondere durch Gasverdüsung mit einer Abkühlgeschwindigkeit von $10^2$ bis $10^5$ °C/sec. hergestellt werden.

Eine bevorzugte Form des pulverförmigen Werkstoffs gemäss der Erfindung besteht aus einer Mischung von drei Legierungspulvern der im Patentanspruch 6 angegebenen Zusammensetzungen, wobei das Mischungsverhältnis dieser Legierungspulver wie in Patentanspruch 6 angegeben ist. Weitere bevorzugte Mischungsverhältnisse sind in den Patentansprüchen 7 und 8 angegeben. Die Bezeichnung « max. » im Rahmen der Zusammensetzung der einzelnen Legierungen bedeutet den Maximalgehalt an dem entsprechenden Legierungselement, wobei die Angaben jeweils in Gewichtsprozent der einzelnen Legierungen ausgedrückt sind.

Die erfindungsgemässen pulverförmigen Werkstoffe werden jeweils auf eine Korngrösse im Bereich von — 180/+ 37 µm gesiebt. Es wird im allgemeinen eine kugelige Form erzielt, wobei ein Fliessvermögen (Flow-Rate nach HALL, siehe auch ASTM-Normen) erzielt wird, das einem Wert von weniger als 40 sec/50 g entspricht.

Die erfindungsgemässe Schutzschicht erweist sich als besonders nützlich zum Verschleissschutz, beispielsweise von Motorteilen, die hohen Temperaturen und Heissgaskorrosionen ausgesetzt sind.

## Patentansprüche

1. Durch ein thermisches Auftragsverfahren herstellbare Schutzschicht auf einem metallischen Grundkörper, dadurch gekennzeichnet, dass sie aus einer Legierung der folgenden in Gewichtsprozent ausgedrückten Zusammensetzung besteht :

| | |
|---|---|
| C | 0,5-1,5 |
| Si | 0,5-2,5 |
| Mn | 0,1-1 |
| Cr | 20-30 |
| Mo | 5-10 |
| Fe | 0,5-5 |
| B | 0,5-2,5 |
| Co | 0,01-1 |
| W | 1-2,5 |
| Ni | Rest |

2. Schutzschicht nach Patentanspruch 1, dadurch gekennzeichnet, dass die Legierung die folgende in Gewichtsprozent ausgedrückte Zusammensetzung aufweist :

| | |
|---|---|
| C | 0,5-1 |
| Si | 1,5-2,2 |
| Mn | 0,3-0,8 |
| Cr | 22-25 |
| Mo | 7-9 |
| Fe | 1-3 |
| B | 1-2 |
| Co | 0,01-0,5 |

| | |
|---|---|
| W | 1-2 |
| Ni | Rest |

3. Pulverförmiger Werkstoff zum Herstellen der Schicht nach einem der Patentansprüche 1 oder 2, dadurch gekennzeichnet, dass er aus einer Legierung der gleichen Zusammensetzung wie die Schicht besteht.

4. Verfahren zur Herstellung des pulverförmigen Werkstoffs nach Patentanspruch 3, dadurch gekennzeichnet, dass das Pulver durch Gasverdüsen der Legierung mit einer Abkühlgeschwindigkeit von $10^2$ bis $10^5$ °C/sec. hergestellt wird.

5. Pulverförmiger Werkstoff zum Herstellen der Schicht nach einem der Patentansprüche 1 oder 2, dadurch gekennzeichnet, dass er aus einer Mischung von Pulvern der drei folgenden Legierungen A, B und C besteht, deren Zusammensetzungen jeweils in Gewichtsprozent ausgedrückt sind :

Legierung A :

| | |
|---|---|
| C | 0,1-0,15 |
| Si | 0,2-0,4 |
| Mn | 1-1,5 |
| Cr | 14-16 |
| Mo | 15-17 |
| Fe | 4-6 |
| Co | max. 0,1 |
| W | 4-5 |
| Ni | Rest |

Legierung B :

| | |
|---|---|
| C | 0,8-1 |
| Si | 3,9-4,5 |
| Cr | 25-27 |
| Fe | max. 1 |
| B | 3,3-3,8 |
| Co | max. 0,1 |
| Ni | Rest |

Legierung C :

| | |
|---|---|
| C | 1,6-1,8 |
| Si | 0,8-1,2 |
| Mn | max. 1 |
| Cr | 27-29 |
| Mo | 6,5-8,5 |
| Fe | max. 1 |
| B | max. 0,1 |
| Co | max. 0,2 |
| W | max. 0,2 |
| Ni | Rest, |

wobei die Anteile der drei Legierungspulver in Gewichtsprozent der Gesamtmischung die folgenden sind :

| | |
|---|---|
| A | 20 %-50 % |
| B | 20 %-50 % |
| C | 25 %-45 % |

6. Werkstoff nach Patentanspruch 5, dadurch gekennzeichnet, dass die Anteile der Legierungspulver in Gewichtsprozent der Gesamtmischung die folgenden sind :

| | |
|---|---|
| A | 30 %-35 % |
| B | 30 %-40 % |
| C | 25 %-40 % |

7. Werkstoff nach Patentanspruch 5, dadurch gekennzeichnet, dass die Anteile der Legierungspulver in Gewichtsprozent der Gesamtmischung die folgenden sind :

| A | 32,5 % |
|---|---|
| B | 35  % |
| C | 32,5 % |

8. Werkstoff nach einem der Patentansprüche 3, 5, 6 oder 7, dadurch gekennzeichnet, dass seine Korngrösse im Bereich — 180/+ 37 μm liegt.

**Claims**

1. Protective layer able to be produced by a thermal application process on a metallic basic body, characterized in that it consists of an alloy having the following composition indicated in percent by weight :

| C | 0,5-1,5 |
|---|---|
| Si | 0,5-2,5 |
| Mn | 0,1-1 |
| Cr | 20-30 |
| Mo | 5-10 |
| Fe | 0,5-5 |
| B | 0,5-2,5 |
| Co | 0,01-1 |
| W | 1-2,5 |
| Ni | remainder |

2. Protective layer according to claim 1, characterized in that the alloy has the following composition indicated in percent by weight :

| C | 0,5-1 |
|---|---|
| Si | 1,5-2,2 |
| Mn | 0,3-0,8 |
| Cr | 22-25 |
| Mo | 7-9 |
| Fe | 1-3 |
| B | 1-2 |
| Co | 0,01-0,5 |
| W | 1-2 |
| Ni | remainder |

3. Powdered material for producing the layer as claimed in one of the claims 1 or 2, characterized in that it consists of an alloy of the same composition as the layer.

4. Process of manufacturing the material according to claim 3, characterized in that the powder is produced by gas atomizing of the alloy with a cooling rate from $10^2$ to $10^5$ °C/sec.

5. Powdered material for producing the layer as claimed in one of the claims 1 or 2, characterized in that it consists of a mixture of powders of the three following alloys A, B and C, the compositions of which are indicated in percent by weight :

Alloy A :

| C | 0,1-0,15 |
|---|---|
| Si | 0,2-0,4 |
| Mn | 1-1,5 |
| Cr | 14-16 |
| Mo | 15-17 |
| Fe | 4-6 |
| Co | max. 0,1 |
| W | 4-5 |
| Ni | remainder |

Alloy B :

| C | 0,8-1 |
|---|---|
| Si | 3,9-4,5 |
| Cr | 25-27 |
| Fe | max. 1 |

| | |
|---|---|
| B | 3,3-3,8 |
| Co | max. 0,1 |
| Ni | remainder |

Alloy C :

| | |
|---|---|
| C | 1,6-1,8 |
| Si | 0,8-1,2 |
| Mn | max. 1 |
| Cr | 27-29 |
| Mo | 6,5-8,5 |
| Fe | max. 1 |
| B | max. 0,1 |
| Co | max. 0,2 |
| W | max. 0,2 |
| Ni | remainder, |

the parts of the three alloy powders being as follows, in percent by weight of the total mixture :

| | |
|---|---|
| A | 20 %-50 % |
| B | 20 %-50 % |
| C | 25 %-45 % |

6. Material according to claim 5, characterized in that the parts of the three alloy powders are as follows, in percent by weight of the total mixture :

| | |
|---|---|
| A | 30 %-35 % |
| B | 30 %-40 % |
| C | 25 %-40 % |

7. Material according to claim 5, characterized in that the parts of the three alloy powders are as follows, in percent by weight of the total mixture

| | |
|---|---|
| A | 32,5 % |
| B | 35 % |
| C | 32,5 % |

8. Material according to one of claims 3, 5, 6 or 7, characterized in that its grain size is in the range of — 180/+ 37 μm.

**Revendications**

1. Couche de protection apte à être fabriquée par un procédé d'application thermique, sur un substrat métallique, caractérisée en ce qu'elle est constituée par un alliage ayant la composition suivante, exprimée en pourcentage pondéral :

| | |
|---|---|
| C | 0,5-1,5 |
| Si | 0,5-2,5 |
| Mn | 0,1-1 |
| Cr | 20-30 |
| Mo | 5-10 |
| Fe | 0,5-5 |
| B | 0,5-2,5 |
| Co | 0,01-1 |
| W | 1-2,5 |
| Ni | reste |

2. Couche de protection selon la revendication 1, caractérisée en ce que l'alliage a la composition suivante, exprimée en pourcentage pondéral :

| | |
|---|---|
| C | 0,5-1 |
| Si | 1,5-2,2 |
| Mn | 0,3-0,8 |
| Cr | 22-25 |

| Mo | 7-9 |
|---|---|
| Fe | 1-3 |
| B | 1-2 |
| Co | 0,01-0,5 |
| W | 1-2 |
| Ni | reste |

3. Matériau pulvérulent pour la fabrication de la couche selon une des revendications 1 ou 2, caractérisé en ce qu'il est constitué par un alliage ayant la même composition que celle de la couche.

4. Procédé de fabrication du matériau pulvérulent selon la revendication 3, caractérisé en ce que la poudre est fabriquée par pulvérisation de l'alliage dans un gaz avec une vitesse de refroidissement de $10^2$ à $10^5$ °C/s.

5. Matériau pulvérulent pour la fabrication de la couche selon une des revendications 1 ou 2, caractérisé en ce qu'il est constitué par un mélange de poudres des trois alliages A, B et C suivants, dont les compositions sont respectivement exprimées en pourcentage pondéral :

Alliage A :

| C | 0,1-0,15 |
|---|---|
| Si | 0,2-0,4 |
| Mn | 1-1,5 |
| Cr | 14-16 |
| Mo | 15-17 |
| Fe | 4-6 |
| Co | max. 0,1 |
| W | 4-5 |
| Ni | reste |

Alliage B :

| C | 0,8-1 |
|---|---|
| Si | 3,9-4,5 |
| Cr | 25-27 |
| Fe | max. 1 |
| B | 3,3-3,8 |
| Co | max. 0,1 |
| Ni | reste |

Alliage C :

| C | 1,6-1,8 |
|---|---|
| Si | 0,8-1,2 |
| Mn | max. 1 |
| Cr | 27-29 |
| Mo | 6,5-8,5 |
| Fe | max. 1 |
| B | max. 0,1 |
| Co | max. 0,2 |
| W | max. 0,2 |
| Ni | reste |

les proportions des trois poudres d'alliage, en pourcentage pondéral du mélange total, étant les suivantes :

| A | 20 %-50 % |
|---|---|
| B | 20 %-50 % |
| C | 25 %-45 % |

6. Matériau selon la revendication 5, caractérisé en ce que les proportions des poudres d'alliage, en pourcentage pondéral du mélange total, sont les suivantes :

| A | 30 %-35 % |
|---|---|
| B | 30 %-40 % |
| C | 25 %-40 % |

7. Matériau selon la revendication 5, caractérisé en ce que les proportions des poudres d'alliage, en pourcentage pondéral du mélange total, sont les suivantes :

| | |
|---|---|
| A | 32,5 % |
| B | 35   % |
| C | 32,5 % |

8. Matériau selon l'une des revendications 3, 5, 6 ou 7, caractérisé en ce que sa granulométrie est comprise dans le domaine — 180/+ 37 μm.